(19)

Europäisches Patentamt
European Patent Office
Office européen des brevets

(11) **EP 2 293 297 A1**

(12) **EUROPEAN PATENT APPLICATION**
published in accordance with Art. 153(4) EPC

(43) Date of publication:
**09.03.2011 Bulletin 2011/10**

(51) Int Cl.:
**G11B 7/095** (2006.01)   **G11B 7/135** (2006.01)

(21) Application number: **09769819.5**

(22) Date of filing: **06.01.2009**

(86) International application number:
**PCT/JP2009/000019**

(87) International publication number:
**WO 2009/157109 (30.12.2009 Gazette 2009/53)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **27.06.2008   JP 2008168479**

(71) Applicant: **Panasonic Corporation**
**Kadoma-shi**
**Osaka 571-8501 (JP)**

(72) Inventors:
- **YAMAMOTO, Hiroaki**
 **Osaka 540-6207 (JP)**
- **ONO, Masayuki**
 **Osaka 540-6207 (JP)**
- **NISHIMOTO, Masahiko**
 **Osaka 540-6207 (JP)**

(74) Representative: **Grünecker, Kinkeldey,**
**Stockmair & Schwanhäusser**
**Anwaltssozietät**
**Leopoldstrasse 4**
**80802 München (DE)**

(54) **OPTICAL HEAD DEVICE, OPTICAL INFORMATION PROCESSING DEVICE, AND SIGNAL DETECTION METHOD**

(57)    An optical head device includes a light source (30) configured to emit a light beam, a light collecting optical system configured to converge the light beam onto an information recording medium (10), a hologram element (20) configured to diffract the light beam reflected from the information recording medium (10), and a photodetector (40) having a plurality of detection regions configured to receive the light beam diffracted by the hologram element (20). The hologram element (20) has two diffraction regions (261 and 262) separated from each other by a straight line (260) extending in a radial direction of the information recording medium (10). At least one of the two diffraction regions has a pattern which introduces coma aberration in the radial direction. The light diffracted by the diffraction region having the coma aberration has coma aberration in the radial direction.

FIG.1

EP 2 293 297 A1

**Description**

TECHNICAL FIELD

The present invention relates to optical head devices for recording, reproducing, and erasing information stored on optical media such as optical disks and optical cards, optical information processing apparatuses, and focus error signal detection methods.

BACKGROUND ART

At present, an increase in recording capacity in a single optical information recording medium is needed to record high-definition moving images and information. Thus, providing a plurality of recording layers in an optical information recording medium has been researched.

For example, there are dedicated optical information recording media for DVD-ROMs, DVD-Videos, and the like as read-only media; and media for dual-layer recording have been commercialized. As recording media, dual-layer or double-layer optical information recording media such as DVD-R DL (dual layer) and DVD + R DL (double layer) have been commercialized. As next-generation optical information recording media, dual-layer optical information recording media for recording and reproduction such as Bluray Discs and HD-DVDs. Moreover, four-layer and eight-layer optical information recording media for recording and reproduction have been researched, and recording and reproducing technology of multilayer optical recording media becomes increasingly important. In order to record and reproduce information on and from such optical information recording media, for example, technology of Patent Document 1 is suggested.

On the other hand, recording and reproducing information to and from widely used CDs are also important. A near-infrared semiconductor laser with a wavelength ranging from 780 nm to 820 nm is used as a light source for recording and reproducing information to and from CDs. As a light source for recording and reproducing information to and from DVDs, a red semiconductor laser with a shorter wavelength ranging from 635 nm to 680 nm is used for increasing recording density. Optical disk drives can preferably record and reproduce information to and from the two types of disks having different specifications. Such optical head devices have been developed (e.g., Patent Document 2).

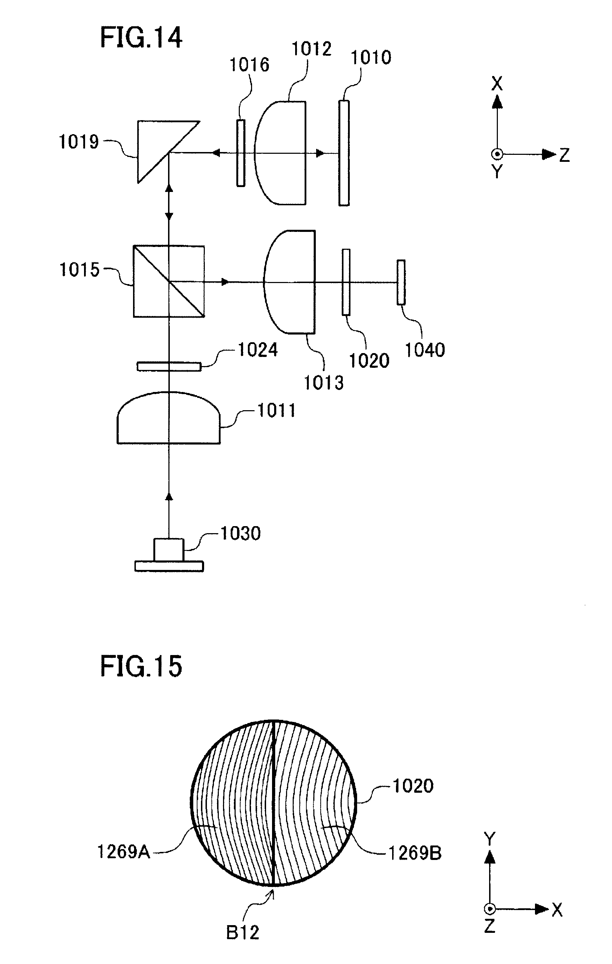

Conventionally, an optical pickup device shown in FIG. 14 has been suggested. The principle of operation of the conventional optical pickup device will be described below. FIG. 14 shows the configuration of a conventional optical pickup device using a diffraction grating (hologram) based on the optical principle.

In the optical pickup device shown in FIG. 14, a semiconductor laser 1030 emits laser light rays for recording and reproduction, and a collimator lens 1011 causes the laser light rays to be parallel (a bundle of parallel rays). A diffraction grating 1024 diffracts the bundle of parallel rays (laser light) into one main beam and two sub-beams. Note that FIG. 14 does not show the individual main beam and sub-beams, but shows their light paths only.

After being transmitted through a polarizing beam splitter 1015, the three beams are directed toward an optical disk 1010 by a mirror 1019, and linear polarization is then converted into circular polarization by a quarter-wave plate 1016. Moreover, the three beams are focused onto the optical disk 1010 by an objective lens 1012. The laser light reflected from the optical disk 1010 travels through the objective lens 1012, the quarter-wave plate 1016, and the mirror 1019; and is then reflected toward a photodetector 1040 by the polarizing beam splitter 1015. The reflected light is collected by a detection lens 1013, and is then diffracted by a hologram element 1020 to reach the photodetector 1040.

Note that, in FIG. 14, a radial direction of the optical disk 1010 is referred to as an x-direction, a track direction is referred to as a y-direction, and a direction perpendicular to these two directions is referred to as a z-direction.

The hologram element 1020 has a disk-like shape as shown in FIG. 15. A dividing line B12 passes through a center of the hologram element 120. The dividing line B12 is substantially parallel to a track direction (y-direction) of the optical disk 1010 in the bundle pattern of the beams reflected from the optical disk 1010. Two diffraction regions 1269A and 1269B, each of which has a grating with an arcuate pattern, are formed on the opposite sides (right and left sides in FIG. 15) of the dividing line B12.

Therefore, the three beams (the main beam and the two sub-beams) each enter both the sides of the dividing line B12, resulting in formation of a total of at least twelve of ±1- order diffracted light beams.

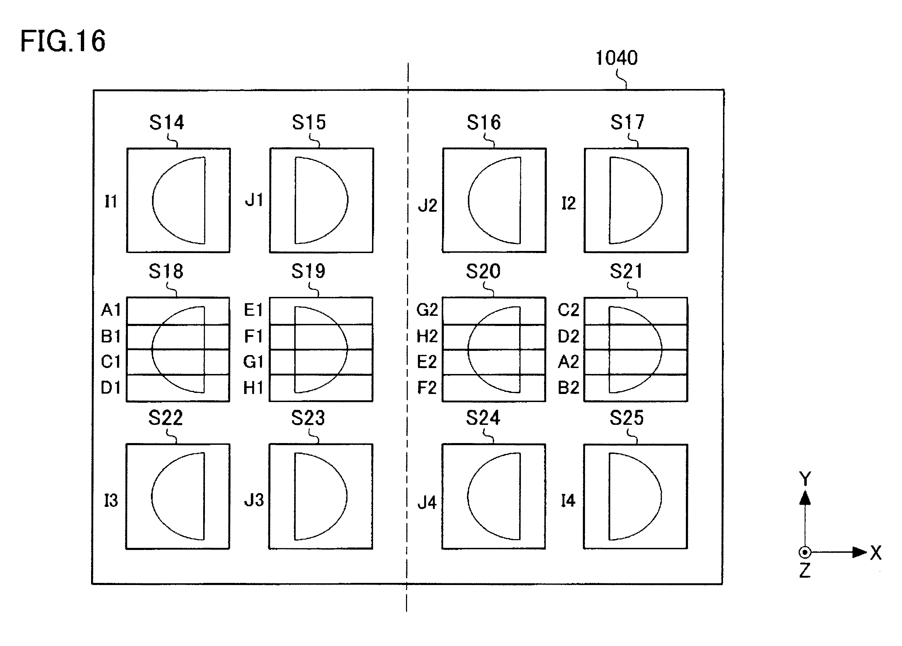

The photodetector 1040, which receives these ±1-order diffracted light beams, has a photodetection surface as shown in FIG. 16. In this example, focus detection is performed by spot size detection (SSD), and tracking detection is performed by differential phase detection (DPD) and differential push-pull (DPP) detection.

Specifically, the photodetection surface has twelve photodetection regions S14-S25, where six photodetection regions are arranged in a matrix of two columns by three rows on each of the opposite sides of a center line, and the two matrices of photodetection regions are symmetrical with respect to the center line as a symmetry axis. Each photodetection region is placed at a position where a corresponding one of the total of twelve of ±1-order diffracted light beams reaches.

The four photodetection regions S18-S21 on the middle row correspond to spots formed by the main beam SP1, in which focus detection and DPD detection are performed.

The photodetection regions S14-S17 and S22-S25 on the upper and lower rows correspond to spots formed by the two sub-beams SP2 and SP3, respectively, in which DPP detection is performed.

Each of the photodetection regions S18-S21 on the middle row is horizontally divided into four cells. Therefore, there are twenty-four individual regions on the entire photodetection surface.

Moreover, the pitch and pattern of the hologram element 1020 are set so that light passing through the diffraction region 1269A of the hologram element 1020 enters the photodetection regions S 14, S18 and S22, S 17, and S21 and S25 on two outer ones of the four columns, and light passing through the diffraction region 1269B enters the photodetection regions S15, S19 and S23, S16, and S20 and S24 on the two inner columns.

In this example, a focus error signal of a servo error signal is detected by the SSD method FE(SSD), and a tracking error signal is detected by the DPD method TE(DPD) and the DPP method TE(DPP) (calculation using main push-pull TE(MPP) and sub-push-pull TE(SPP)). These calculations are represented by:

$$FE(SSD) = (B + C + F + G) - (A + D + E + H)$$

$$TE\,(DPD) = \text{phase}\,(A + B, E + F) + \text{phase}\,(C + D, G + H)$$

$$TE(MPP) = (A + B + C + D) - (E + F + G + H)$$

$$TE(SPP) = I - J$$

$$TE(DPP) = TE(MPP) - \text{Gain}\,(TE(SPP))$$

The phase ( ) represents phase comparison, the Gain ( ) represents a predetermined coefficient, and A, B, C, D, E, F, G, H, I, and J represent the intensities of light signals detected by the photodetection surface of FIG. 16. These light signal intensities are represented by symbols of the photodetection regions of FIG. 16 as follows: A = A1 + A2, B = B1 + B2, C = C 1 + C2, D = D1 + D2, E = E1 + E2, F = F1 + F2, G = G1 + G2, H = H1 + H2, I = I1 + I2 + I3 + I4, and J = J1 + J2 + J3 + J4.

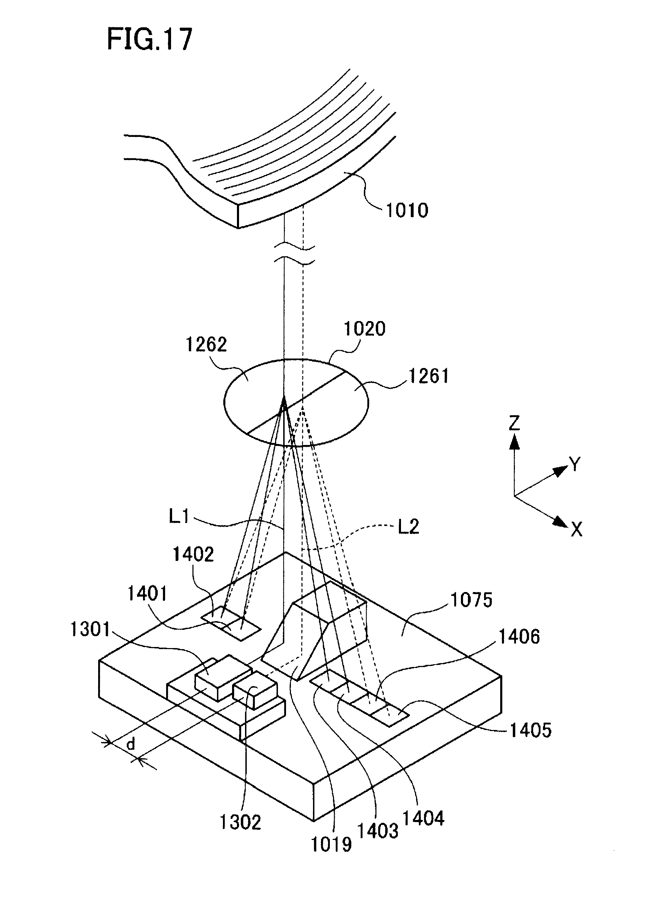

FIG. 17 shows a conventional optical head device capable of recording and reproducing information to and from CDs and DVDs which are two types of disks having different specifications.

The optical head device of FIG. 17 reads information from the optical disk 1010. The device includes a semiconductor laser 1301 being a first light source emitting light with a first wavelength λ1, and a semiconductor laser 1302 being a second light source emitting light with a second wavelength λ2. A red semiconductor laser with an oscillation wavelength ranging from 635 to 680 nm is used as the semiconductor laser 1301 for DVDs, and a near-infrared semiconductor laser with an oscillation wavelength ranging from 780 nm to 820 nm is used as the semiconductor laser 1302 for CDs. In accordance with the type of the optical disk 1010, either one of the semiconductor laser 1030 and the semiconductor laser 1302 emits light.

Light L1 emitted from the semiconductor laser 1301, and light L2 emitted from the semiconductor laser 1302 are reflected by a mirror 1019 located as a front emitting surface of the semiconductor laser 1301 and the semiconductor laser 1302 to enter the optical disk 1010. Light collecting means (not shown) is located between the mirror 1019 and the optical disk 1010. The light L1 and the light L2 are collected onto an information recording surface of the optical disk 1010 by the light collecting means. The light L1 and the light L2 reflected by the optical disk 1010 are diffracted by the hologram element 1020 located between the light collecting means and the mirror 1019, and are detected by photodetectors (1401, 1402, 1403, 1404, 1405, and 1406).

The hologram element 1020 includes two regions of a diffraction region 1261 and a diffraction region 1262, and diffracts incident light as follows.

In reproducing information from DVDs, the incident light L1 is divided into two by the boundary line between the diffraction region 1261 and the diffraction region 1262, thereby generating +1-order light and -1-order light. The generated +1-order light enters the photodetector 1401 and the photodetector 1402, and the -1-order light enters the photodetector 1403 and the photodetector 1404. Based on signals detected by these photodetectors 1401, 1402, 1403, and 1404; focus error signals (by spot size detection (SSD))/tracking detection signals (by differential phase detection (DPD)) and reproduced signals are detected when reproducing information from DVDs.

On the other hand, in reproducing information from CDs, the incident light L2 is divided into two by the boundary line between the diffraction region 1261 and the diffraction region 1262, thereby generating +1-order light and -1-order light. The generated +1-order light enters the photodetector 1401 and the photodetector 1402, and the -1-order light enters the photodetector 1405 and the photodetector 1406. Based on signals detected by these photodetectors 1401, 1402, 1405, and 1406, focus error signals (by SSD)/ tracking detection signals (by a triple beam method/push-pull (PP) detection) and reproduced signals are detected when reproducing information from CDs.

PATENT DOCUMENT 1: Japanese Patent Publication No. 2001-229573
PATENT DOCUMENT 2: Japanese Patent Publication No. 2001-176119

SUMMARY OF THE INVENTION

TECHNICAL PROBLEM

However, according to the conventional optical pickup device shown in FIG. 14, i.e., an optical pickup device using a conventional diffraction grating (a hologram element), the following problem arises when using an optical information recording medium having two recording layers.

Dual-layer optical information recording media each include two recording layers arranged in the thickness direction of the medium. A first recording layer closer to the optical pickup device is a translucent recording layer. The optical pickup device records or reproduces information to or from the two layers by changing a focus between the first and second recording layers.

If such a dual-layer optical information recording medium is used in a conventional optical pickup device, a problem arises when a tracking signal is detected. Specifically, a sub-push-pull signal for tracking is disturbed. This is because reflected light from a recording layer on which focus is not achieved, which is out-of-focus light, overlaps the detection region of the photodetector 1040.

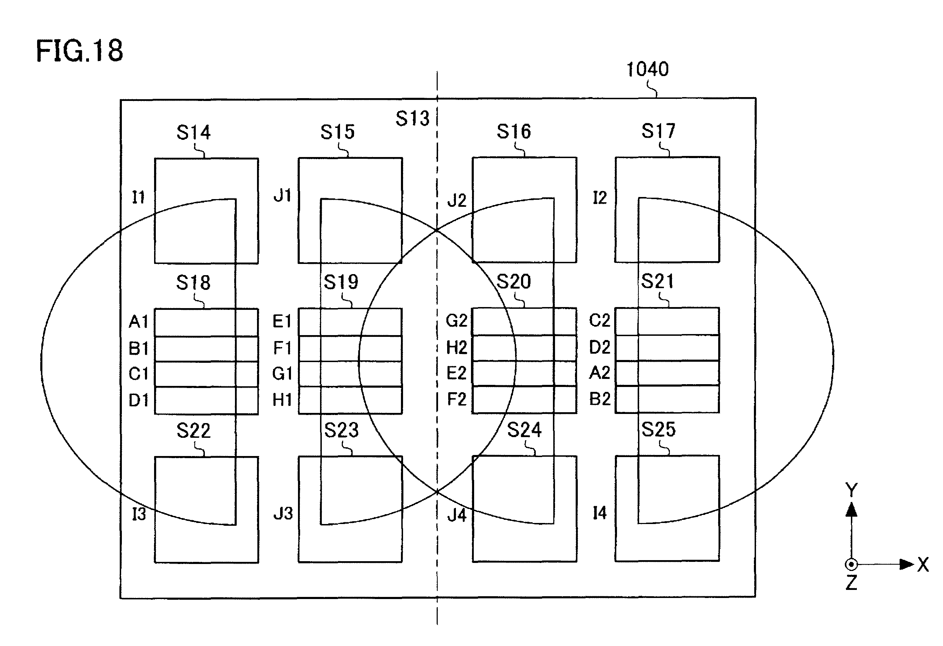

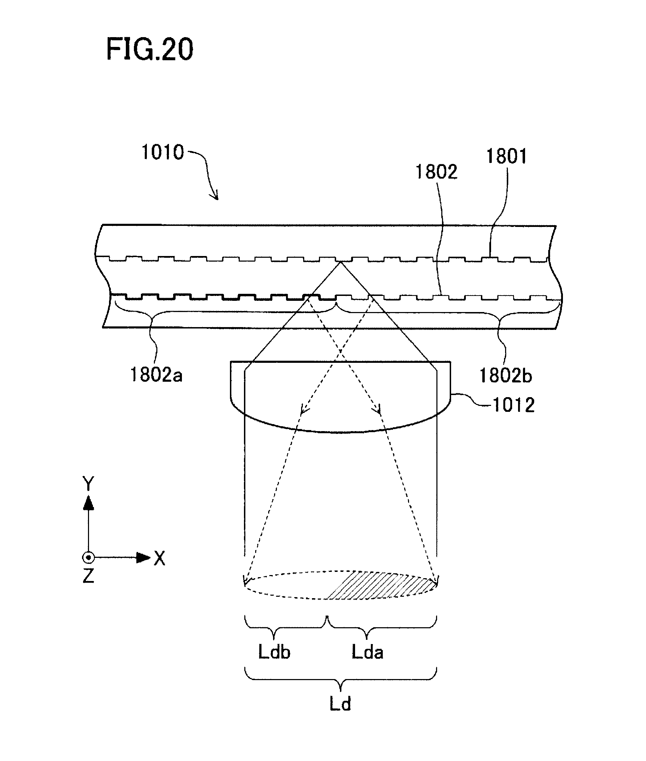

This situation is shown in FIGS. 18 and 20. FIG. 20 shows a situation in which focus is achieved on a first information recording layer 1801 of a dual-layer optical information recording medium which is farther from the optical pickup device. Not only a collected light beam from the first information recording layer 1801 on which focus is achieved, but also out-of-focus light from the other layer, i.e., an out-of-focus layer (a second information recording layer 1802) on which focus is not achieved enter the detection region of the photodetector 1040. When out-of-focus light moves across the boundary between a recorded portion 1802a and an unrecorded portion 1802b of the second information recording layer 1802, the out-of-focus light has a particularly significant influence on a tracking error signal due to an imbalance in the amount of light. In this case, of the three beams, the main beam having a larger light amount than those of the sub-beams becomes out-of focus light having the most significant influence.

FIG. 18 shows a situation in which the out-of-focus light of the main beam enters and overlaps each photodetection region. The out-of-focus light of the main beam extends off the photodetection regions S 18, S 19, S20, and S21 which generate TE(MPP) to enter the photodetection regions S 14, S 15, S16, S 17, S22, S23, S24, and S25 which generate TE(SPP).

The gain of a photodetection region which generates the TE(SPP) signal is typically set to be larger than the gain of a photodetection region which generates TE(MPP). Therefore, out-of-focus light has a significant influence on TE(SPP).

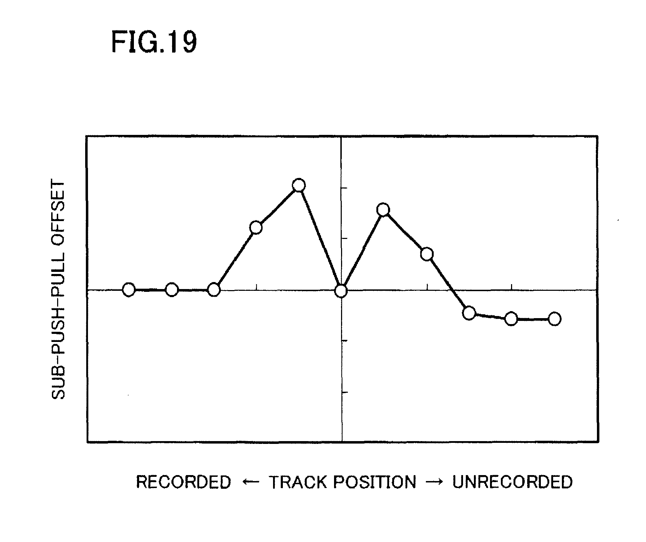

FIG. 19 shows a TE(SPP) signal which is generated when out-of-focus light moves across the boundary between the recorded portion 1802a and the unrecorded portion 1802b of the second information recording layer 1802. Note that it is assumed that no AC signal is present.

As such, when out-of-focus light moves across the boundary between a recorded portion and an unrecorded portion, the TE(SPP) signal fluctuates, and therefore, a stable tracking error signal cannot be generated. This is one of the problems. Note that, conversely, when focus is achieved on the second information recording layer 1802, reflected light from the first information recording layer 1801 causes a similar problem.

Furthermore, in reproducing DVDs, at least eight detection regions of A-H are needed to receive light to detect a DPD signal and an FE signal at the same time. Thus, an amplifier circuit is required for each detection region. As a result, problems arise, such as degradation in a reproduced signal due to an increase in amplifier noise, degradation in a servo signal due to a circuit offset, and the like. Moreover, the circuit size of an integrated circuit used in the optical pickup device increases, resulting in an increase in cost, which is also a problem. These problems need to be addressed.

In a conventional optical head device shown in FIG. 17, there is an emission point distance d between the semiconductor laser 1301 and the semiconductor laser 1302.

Thus, when the semiconductor laser 1301 is set to the center of the hologram element, the semiconductor laser 1302 is off the center of the hologram element 1020. As a result, an imbalance in the tracking error signal is generated in the semiconductor laser 1302 by the push-pull detection, and therefore, a stable tracking error signal cannot be obtained.

Similarly, when the semiconductor laser 1302 is the center of the hologram element, the semiconductor laser 1301 is off the center of the hologram. Therefore, an imbalance in the tracking error signal is generated in the semiconductor laser 1030 by the DPD, and thus, a stable tracking error signal cannot be obtained.

Furthermore, a tracking error signal needed for recording information to an optical disk cannot be generated by, e.g., differential push-pull (DPP) detection.

From the foregoing, a stable tracking error signal cannot be detected in a recording and reproducing device. This is also a problem to be addressed.

In view of the aforementioned problems, a lower-cost optical head device will be described below, which is applicable to at least a dual-layer optical information recording medium and can detect focus and tracking error signals which allow more accurate and stable recording and reproduction.

SOLUTION TO THE PROBLEM

A first optical head device of the present disclosure includes a light source configured to emit a light beam, a light collecting optical system configured to converge the light beam onto an information recording medium, a hologram element configured to diffract the light beam reflected from the information recording medium, and a photodetector having a plurality of detection regions configured to receive the light beam diffracted by the hologram element. The hologram element has two diffraction regions separated from each other by a straight line extending in a radial direction of the information recording medium. At least one of the two diffraction regions has a pattern which introduces coma aberration in the radial direction to the diffracted light.

Note that at least one pair of detection regions of the plurality of detection regions possessed by the photodetector are preferably provided, facing each other, on opposite sides of a dividing line extending in the radial direction. The diffracted light having the coma aberration preferably enters the dividing line. A focus error signal is preferably obtained based on signals detected in the at least one pair of detection regions.

According to the first optical head device, the diffraction regions of the hologram element are separated by the straight line extending in the radial direction of the information recording medium. The diffracted light can be detected by the plurality of photodetection regions. Thus, in the radial direction, variations in light entering the photodetector can be canceled by each other, even if the variations occur. Therefore, in an information recording medium having a plurality of information recording layers, even if out-of-focus light from an information recording layer, on which focus is not achieved, moves across the boundary between a recorded area and an unrecorded area of the information recording layer so that the intensity varies; a focus error signal can be stably obtained without being affected by the variation.

Next, a second optical head device of the present disclosure includes a light source configured to emit a light beam, a light collecting optical system configured to converge the light beam onto an information recording medium, a hologram element configured to diffract the light beam reflected from the information recording medium, and a photodetector having a plurality of detection regions configured to receive the light beam diffracted by the hologram element. The plurality of detection regions possessed by the photodetector include a first photodetection region and a second photodetection region provided, facing each other, on opposite sides of a first dividing line extending in a radial direction of the information recording medium, and a third photodetection region and a fourth photodetection region provided, facing each other, on opposite sides of a second dividing line extending in the radial direction. The hologram element has a first diffraction region and a second diffraction region separated from each other by a straight line extending in the radial direction. The first diffraction region has a pattern which introduces coma aberration in the radial direction, and generates diffracted light converging onto the first dividing line. The second diffraction region has a pattern which introduces coma aberration in the radial direction, and generates diffracted light converging onto the second dividing line. A focus error signal is obtained based on a differential signal between a signal in the first detection region and a signal in the second detection region, and a differential signal between a signal in the third detection region and a signal in the fourth detection region.

Also in the second optical head device, two diffraction regions of the hologram element are separated by the straight line extending in the radial direction of the information recording medium. Furthermore, the detection regions of the photodetector are provided to face each other on opposite sides of the dividing line extending in the radial direction. Therefore, similar to the first optical head device, a focus error signal can be stably obtained when using an information recording medium having a plurality of information recording layers.

Next, a third optical head device of the present disclosure includes a light source configured to emit a light beam, a diffraction grating configured to generate one main beam and two sub-beams from the light beam, a light collecting optical system configured to converge the main beam and the sub-beams onto an information recording medium, a hologram element configured to diffract the main beam and the sub-beams reflected from the information recording medium, and a photodetector having a plurality of detection regions configured to receive light diffracted by the hologram element. The hologram element has two diffraction regions separated from each other by a straight line extending in a radial direction of the information recording medium. At least one of the two diffraction regions has a pattern which introduces coma aberration in the radial direction to the diffracted light.

Note that the plurality of detection regions possessed by the photodetector preferably include a first pair of detection regions provided, facing each other, on opposite sides of a first dividing line extending in the radial direction, and a second pair of detection regions provided, facing each other, on opposite sides of a second dividing line extending in the radial direction. The diffracted light of the main beam having the coma aberration preferably enters the first dividing line of the first pair of detection regions. A focus error signal is preferably obtained based on signals detected in the first pair of detection regions. The diffracted light of the sub-beams having the coma aberration preferably enters the second dividing line of the second pair of detection regions. A tracking error signal is preferably obtained based on signals detected in the second pair of detection regions.

Also in the third optical head device, two diffraction regions of the hologram element are separated by the straight line extending in the radial direction of the information recording medium. Furthermore, the detection regions of the photodetector are provided to face each other on opposite sides of the dividing line extending in the radial direction. Therefore, similar to the first optical head device, a focus error signal can be stably obtained when using an information recording medium having a plurality of information recording layers. Moreover, one main beam and two sub-beams can be generated from the light source to be used for obtaining a focus error signal and a tracking error signal, respectively.

The first to third optical head devices preferably include another emission point arranged in line with the emission point of the light source in the radial direction, and emitting a light beam having a different wavelength from that of the emission point.

With this configuration, the optical head devices can use light beams with a plurality of wavelengths and are applicable to multiple types of information recording media requiring light having different wavelengths for recording and reproducing information to and from CDs and DVDs. Since the other emission point is arranged in line with the emission point in the radial direction, a predetermined distance between the emission point and the other emission point does not affect detection of a focus error signal and the like, regardless of which of the wavelengths of light is used.

Next, an optical information processing apparatus of the present disclosure is configured to record and reproduce information to and from an information recording medium by irradiating the information recording medium with light, and includes any one of the first to third optical head devices.

According to the optical information processing apparatus of the present disclosure, a focus error signal and the like can be stably detected even when using an information recording medium having multiple layers. Thus, more stable recording and reproduction can be performed.

In a first method of the present disclosure for detecting a focus error signal for an optical head device, the optical head device includes a light source configured to emit a light beam, a light collecting optical system configured to converge the light beam onto an information recording medium, a hologram element configured to diffract the light beam reflected from the information recording medium, and a photodetector having a plurality of detection regions configured to receive the light beam diffracted by the hologram element. The hologram element has two diffraction regions separated from each other by a straight line extending in a radial direction of the information recording medium. At least one of the two diffraction regions has a pattern which introduces coma aberration in the radial direction to the diffracted light. At least one pair of detection regions of the plurality of detection regions possessed by the photodetector are provided, facing each other, on opposite sides of a dividing line extending in the radial direction. The diffracted light having the coma aberration enters the dividing line. The method includes the step of obtaining the focus error signal based on signals detected in the at least one pair of detection regions.

Then, in a second method of the present disclosure for detecting a focus error signal for an optical head device, the optical head device includes a light source configured to emit a light beam, a light collecting optical system configured to converge the light beam onto an information recording medium, a hologram element configured to diffract the light beam reflected from the information recording medium, and a photodetector having a plurality of detection regions configured to receive the light beam diffracted by the hologram element. The plurality of detection regions possessed by the photodetector include a first photodetection region and a second photodetection region provided, facing each other, on opposite sides of a first dividing line extending in a radial direction of the information recording medium, and a third photodetection region and a fourth photodetection region provided, facing each other, on opposite sides of a second dividing line extending in the radial direction. The hologram element has a first diffraction region and a second diffraction region separated from each other by a straight line extending in the radial direction. The first diffraction region has a pattern which introduces coma aberration in the radial direction, and generates diffracted light converging onto the first dividing line. The second diffraction region has a pattern which introduces coma aberration in the radial direction, and generates diffracted light converging onto the second dividing line. The method includes the step of obtaining a focus error signal based on a differential signal between a signal in the first detection region and a signal in the second detection region, and a differential signal between a signal in the third detection region and a signal in the fourth detection region.

In the detection method of the focus error signal according to the present disclosure, two diffraction regions separated by the straight line extending in the radial direction diffract light reflected from the information recording medium. The diffracted light by the diffraction regions enter the diffraction regions separated by the dividing line in the radial direction. As such, as explained in the description of the optical head device of the present disclosure, a focus error signal can be stably detected even when using an information recording medium having multiple layers.

ADVANTAGES OF THE INVENTION

The optical head device of the present invention is applicable to an information recording medium having a plurality of information recording layers, and detects a stable tracking error signal which allows more accurate and stable recording and reproduction. Also in the optical head device having two light sources in accordance with two wavelengths, a tracking error signal is stably detected regardless of which of the light sources is used. This enables stable recording and reproduction of various information recording media using light having different wavelengths.

BRIEF DESCRIPTION OF THE DRAWINGS

[FIG. 1] FIG. 1 is a diagram showing a configuration of a main portion of an example optical head device according to a first embodiment.
[FIG. 2] FIG. 2 is a plan view showing an example hologram element in the first embodiment.
[FIG. 3] FIG. 3 is a plan view showing an example photodetector in the first embodiment.
[FIG. 4] FIGS. 4(a)-4(e) are diagrams showing spots on the photodetector in the first embodiment.
[FIG. 5] FIG. 5 is a diagram showing an example focus error signal in the first embodiment.
[FIG. 6] FIG. 6 is a diagram showing an optical information recording medium having two information recording layers, and light reflected from the medium.
[FIG. 7] FIG. 7 is a diagram showing stray light on the example photodetector in the first embodiment.
[FIG. 8] FIG. 8 is a diagram showing variations in an example sub-push-pull signal in the first embodiment.
[FIG. 9] FIG. 9 is a diagram showing a configuration of a main portion of an example optical head device according to a second embodiment.
[FIG. 10] FIG. 10 is a plan view showing an example hologram element in the second embodiment.
[FIG. 11] FIG. 11 is a plan view showing an example photodetector in the second embodiment.
[FIG. 12] FIG. 12 is a diagram showing a configuration of a main portion of an example optical head device according to a third embodiment.
[FIG. 13] FIG. 13 is a plan view showing an example photodetector in the third embodiment.
[FIG. 14] FIG. 14 is a diagram showing a configuration of an optical head device as background art.
[FIG. 15] FIG. 15 is a plan view showing a hologram element as background art.
[FIG. 16] FIG. 16 is a plan view showing a photodetector as background art.
[FIG. 17] FIG. 17 is a diagram showing a configuration of an optical head device as background art.
[FIG. 18] FIG. 18 is a plan view showing a hologram element as background art.
[FIG. 19] FIG. 19 is a diagram showing variations in a sub-push-pull signal in an optical head device as background art.
[FIG. 20] FIG. 20 is a diagram showing an optical information recording medium having two information recording layers, and light reflected from the medium.

DESCRIPTION OF REFERENCE CHARACTERS

L0                              Light

L1                              Light

P1                              Emission Point

| | |
|---|---|
| L2 | Light |
| P2 | Emission Point |
| L3 | Light |
| P3 | Emission Point |
| 10 | Optical Disk |
| 11 | Collimator Lens |
| 12 | Objective Lens |
| 19 | Reflecting Mirror |
| 20 | Hologram Element |
| 24 | Diffraction Grating |
| 30 | Semiconductor Laser |
| 30a | Semiconductor Laser |
| 40 | Photodetector |
| 45a | Photodetection Region |
| 260 | Straight Line |
| 261, 262 | Diffraction Regions |
| 301 | Semiconductor Laser |
| 401 | Photodetector |
| 451 | Photodetection Region Group |
| 451a | Photodetection Region |
| 451 b | Photodetection Region |
| 452 | Photodetection Region Group |
| 452a | Photodetection Region |
| 452b | Photodetection Region |
| 453 | Photodetection Region Group |
| 453a | Photodetection Region |
| 453b | Photodetection Region |
| 454 | Photodetection Region Group |
| 454a | Photodetection Region |

| 454b | Photodetection Region |
| 461 | First Dividing Line |
| 462 | Second Dividing Line |
| 463 | Third Dividing Line |
| 464 | Fourth Dividing Line |
| 500 | +1-Order Light Detection Region |
| 501 | -1-Order Light Detection Region |
| 601a, 602a, 601b, 602b, 601c | Spots |
| 601a', 602a', 601b', 602b', 601 c' | Spots |
| 741 | Holding Means |
| 801 | Information Recording Layer |
| 802 | Information Recording Layer |
| 802a | Recorded Area |
| 802b | Unrecorded Area |

DESCRIPTION OF EMBODIMENTS

Embodiments of the present disclosure will be described hereinafter with reference to the drawings.

First Embodiment

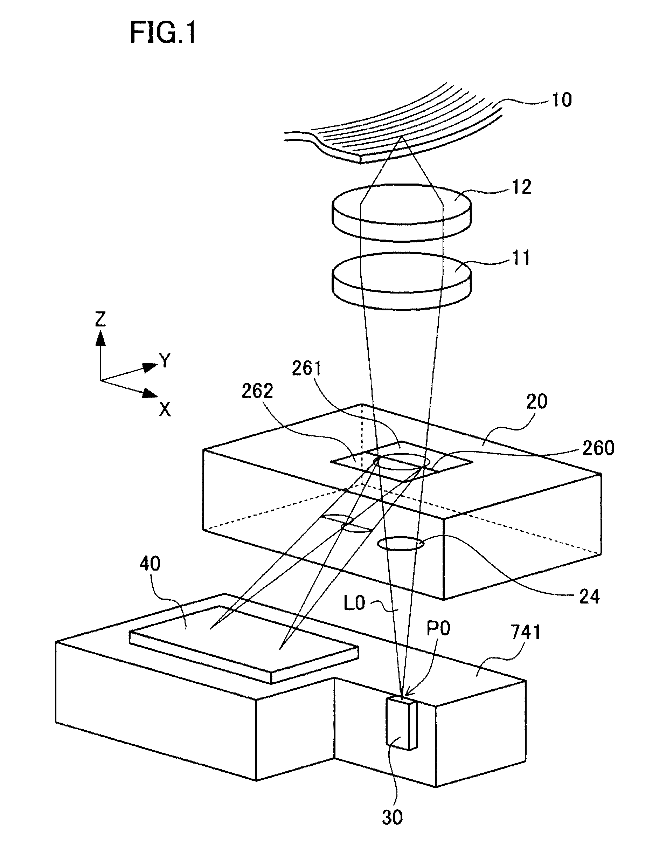

FIG. 1 is a diagram schematically showing a configuration of an example optical head device according to a first embodiment of the present disclosure.

In the optical head device, a semiconductor laser 30 having an emission point P0, and a photodetector 40 are fixed to holding means 741. A hologram element 20 having a diffraction grating 24 and diffraction regions 261 and 262 is also provided. The hologram element 20 is fixed to another holding means (not shown) so that the hologram element 20 has a predetermined positional relationship to the holding means 741.

The other holding means may be an optical mount for the optical head device. Alternatively, a holding member different from optical mounts may be used to provide an integral unit of the hologram element 20, the semiconductor laser 30, and the photodetector 40. With such a unit, the optical system can be more stably constructed.

The optical head device further includes a collimator lens 11 and an objective lens 12 which constitute a light collecting optical system which collects laser light (light L0) emitted by the semiconductor laser 30 onto an optical disk 10, which is an information recording medium. The optical head device further includes a lens drive mechanism (not shown) which drives and moves the objective lens in an optical axis direction (Z-direction) of the objective lens and in a radial direction (X-direction) of the optical disk 10.

An optical axis direction of the light collecting optical system, a radial direction of the optical disk 10, and a track direction (tangential direction) of the optical disk 10 are hereinafter referred to as a Z-direction, an X-direction, and a Y-direction, respectively, as shown in FIG. 1 unless otherwise specified. Note that, even when the optical axis is bent using a mirror, a prism, or the like in the optical system of the optical head device, the directions are defined with reference to mappings of the optical axis and the optical disk 10.

Next, laser light emitted by the semiconductor laser 30 in the example optical head device will be described. The light L0 emitted by a semiconductor laser 30 is diffracted at a desired ratio by the diffraction grating 24 of the hologram element 20 to be divided into a main beam (L0a) which is zeroth-order light, and sub-beams L0b and L0c which are ±1-order light (the beams are not individually shown). These beams are transmitted through diffraction regions 261 and 262 of the hologram element 20 before being collected onto an information recording surface of an optical disk 10 by a collimator lens 11 and an objective lens 12. Light reflected from the optical disk 10 is converted by the objective lens 12 and the collimator lens 11, into light which is in turn converged toward an emission point P0 of the semiconductor laser 30. The light thus converted enters the hologram element 20 and is diffracted by the diffraction regions 261 and 262. The diffracted light enters the photodetector 40 and is detected as a signal. In this embodiment, a size and a position of the diffraction grating 24 are set so that the light diffracted by the diffraction regions 261 and 262 does not enter the diffraction grating 24 and is not further diffracted.

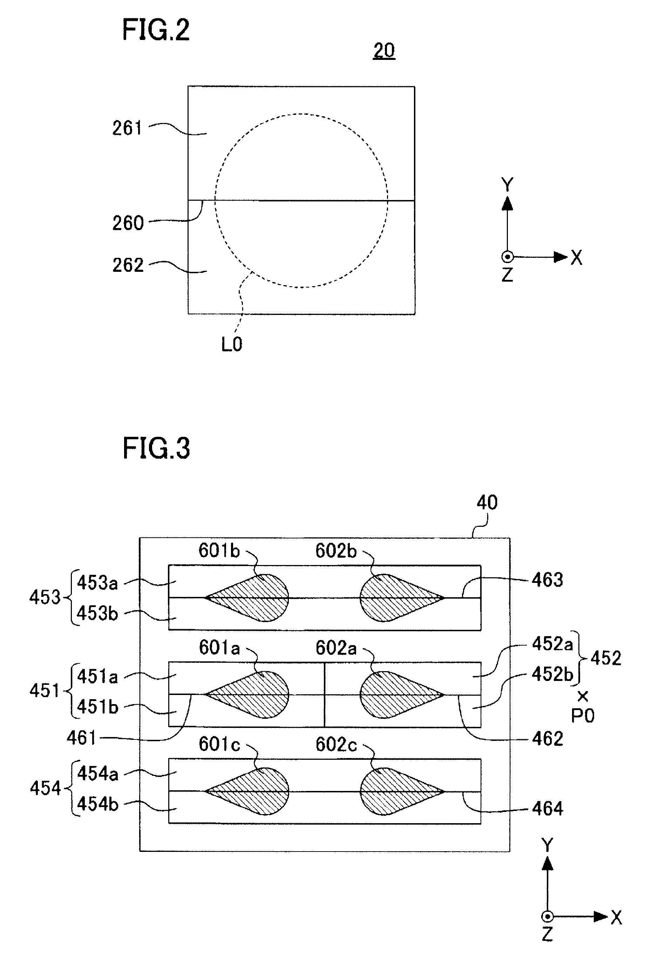

Then, the diffraction regions 261 and 262 of the hologram element 20, and the photodetector 40 will be described in detail. FIG. 2 shows the diffraction regions 261 and 262 of the hologram element 20. FIG. 3 shows a configuration of the photodetector 40. An X-axis, a Y-axis, and a Z-axis shown in FIGS. 2 and 3 are the same as the three axes of FIG. 1.

As shown in FIG. 2, the hologram element 20 has the diffraction regions 261 and 262 which are separated from each other by a straight line 260 which extends through substantially a center of the light L0 (the optical axis of the light collecting optical system) and is substantially parallel to the X-axis. The diffraction regions 261 and 262 each have a grating pattern which transmits the light emitted by the semiconductor laser 30 without modification as described above, and also diffracts returning light reflected from the optical disk 10 toward the photodetector 40. Moreover, the grating pattern of the diffraction region 261 is different from that of the diffraction region 262. The light beams diffracted by the diffraction regions 261 and 262 enter a relatively negative side and a relatively positive side, respectively, in the X-direction of the photodetector 40 (see FIG. 1).

On the other hand, as shown in FIG. 3, the photodetector 40 has a photodetection region group 451 and a photodetection region group 452 which are arranged side by side in the X-direction. The photodetector 40 further has a photodetection region group 453 and a photodetection region group 454 on the opposite sides of the photodetection region groups 451 and 452 in the Y-direction.

The photodetection region groups 451 and 452 of these photodetection region groups are associated with the main beam (L0a) of the returning light from the optical disk 10.

The photodetection region group 451 includes a photodetection region 451a and a photodetection region 451b which are provided, facing each other, on the opposite sides of a first dividing line 461 substantially parallel to the X-axis. The photodetection region group 452 includes a photodetection region 452a and a photodetection region 452b which are provided, facing each other, on the opposite sides of a second dividing line 462 substantially parallel to the X-axis.

The grating pattern of the diffraction region 261 diffracts the main beam (L0a) of the returning light from the optical disk 10 toward the photodetection region group 451 so that the diffracted light straddles the opposite sides (the photodetection regions 451a and 451b) of the first dividing line 461. Moreover, the grating pattern diffracts the main beam to form a spot 601a having coma aberration in the X-direction which enters the photodetection region group 451.

In this case, a larger proportion of light detected by the photodetection region 451a corresponds to a more positive side of the diffraction region 261 with respect to the X-axis of FIG. 2, and a larger proportion of light detected by the photodetection region 451b corresponds to a more negative side of the diffraction region 261 with respect to the X-axis of FIG. 2. Therefore, the photodetection regions 451a and 451b can be used to detect a tracking error signal using the push-pull method as described below.

Similarly, the grating pattern of the diffraction region 262 diffracts the main beam (L0a) of the returning light from the optical disk 10 toward the photodetection region group 452 so that the diffracted light straddles the opposite sides (the photodetection regions 452a and 452b) of the second dividing line 462. Moreover, the grating pattern diffracts the main beam to form a spot 602a having coma aberration in the X-direction which enters the photodetection region group 452, where the coma aberration has a polarity opposite to that of the diffraction region 261.

In this case, a larger proportion of light detected by the photodetection region 452a corresponds to a more positive side of the diffraction region 262 with respect to the X-axis of FIG. 2, and a larger proportion of light detected by the photodetection region 452b corresponds to a more negative side of the diffraction region 262 with respect to the X-axis of FIG. 2. Therefore, the photodetection regions 452a and 452b can be used to detect a tracking error signal using the push-pull method as described below.

Next, the photodetection region group 453 includes a photodetection region 453a and a photodetection region 453b which are provided, facing each other, on the opposite sides of a first dividing line 463 substantially parallel to the X-axis. Similarly, the photodetection region group 454 includes a photodetection region 454a and a photodetection region 454b which are provided, facing each other, on the opposite sides of a second dividing line 464 substantially parallel to the X-axis. Sub-beams (L0b and L0c) of the returning light from the optical disk 10 enter the photodetection regions.

The sub-beam L0b is diffracted by the hologram element 20, and enters the photodetection region group 453 across the third dividing line 463. At this time, the light diffracted by the diffraction region 261 of the hologram element 20 enters as a spot 601 b, and the light diffracted by diffraction region 262 enters as a spot 602b.

Similarly, the sub-beam L0c is diffracted by the hologram element 20, and enters the photodetection region group 454 across the fourth dividing line 464. At this time, the light diffracted by the diffraction region 261 of the hologram element 20 enters as a spot 601c, and the light diffracted by the diffraction region 262 enters as a spot 602c.

With respect to the sub-beams L0b and L0c, similar to the main beam L0a, a tracking error signal is obtained by the push-pull detection based on signals in the two photodetection regions emitted by each spot.

Next, a method of detecting a focus error signal and a tracking error signal will be described. In the example optical head device, a focus error signal FE is generated by calculation of expression 1 based on the method described below in detail. As tracking error signals, a tracking error signal $TE_{DPD}$ and a tracking error signal $TE_{DPP}$ are generated by the DPD and the DPP using calculations of the following expressions.

$$FE = (B + D) - (A + C) \qquad (1)$$

$$TE_{DPP} = TE_{MPP} - k \cdot TE_{SPP} \qquad (2)$$

$$TE_{DPD} = \text{phase}(A, B) - \text{phase}(C, D) \qquad (3)$$

A, B, C, D, E and F each represent a signal detected in the corresponding photodetection region of FIG. 3. Specifically, A represents a signal detected in the photodetection region 451b, B represents a signal detected in the photodetection region 451a, C represents a signal detected in the photodetection region 452a, and D represents a signal detected in the photodetection region 452b. E represents the sum of a signal detected in the photodetection region 453b and a signal detected in the photodetection region 454b. F represents the sum of a signal detected in the photodetection region 453a and a signal detected in the photodetection region 454a.

Moreover, $TE_{MPP}$ represents a push-pull signal of the main beam, and $TE_{SPP}$ is a push-pull signal of the sub-beams. Both of the signals are represented by the following expressions.

$$TE_{MPP} = (A + D) - (B + C) \qquad (4)$$

$$TE_{SPP} = E - F \qquad (5)$$

The symbol k represents a constant which is optimized so that a variation in $TE_{DPP}$ caused by shifting the objective lens 12 is minimized.

A signal RF which reads information recorded on the optical disk 10 is given by:

$$RF = A + B + C + D \qquad (6)$$

As can be seen from expressions (1) and (3), the number of detection regions required to detect the DPD signal and the FE signal, which are required to reproduce DVDs, is four, i.e., the detection regions A-D. That is, the number is decreased by a half from eight, which was conventionally required. This can reduce the number of amplifier circuits required for the detection regions by a half, whereby the amplifier noise and the circuit offset can be reduced. As a result, a satisfactory reproduced signal and servo signal can be obtained. Moreover, the circuit size of an integrated circuit used in the optical head device can be reduced, whereby the optical head device can be provided at a lower cost.

Next, a method of detecting a focus error signal in the example optical head device will be described in detail.

First, operation of detecting a focus error signal will be described.

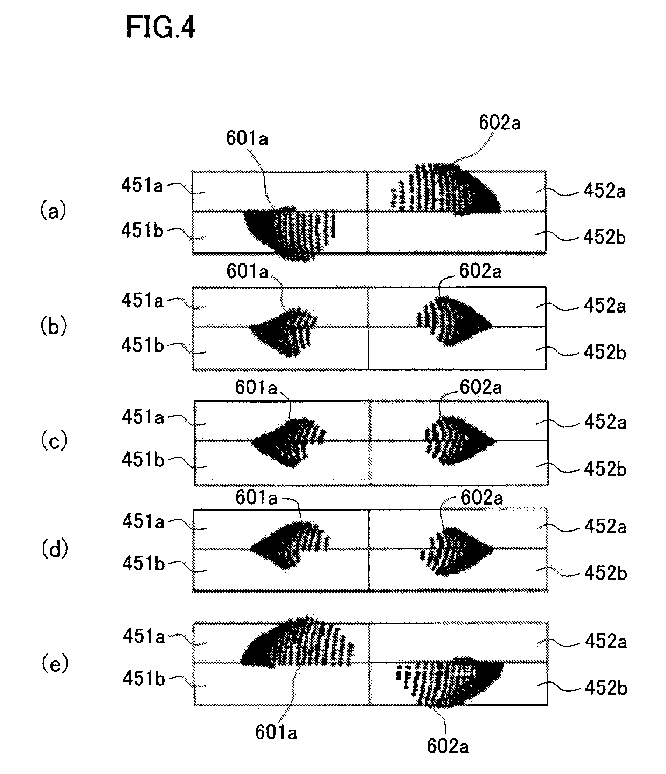

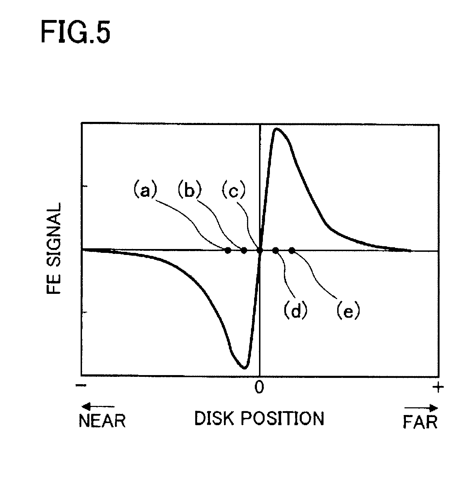

FIGS. 4(a)-4(e) show shapes of the spots 601a and 602a on the photodetector 40 which vary with the position of the optical disk 10. FIG. 5 shows a relationship between positions of the optical disk 10 and focus error signals. In FIG. 5, the origin corresponds to a state in which a minimum spot is formed on an information recording surface of the optical disk 10, i.e., an in-focus state, which is referred to as a state (c). Other states around the state (c) in which the optical disk 10 is positioned closer to or farther from the objective lens 12, are referred to as states (a)-(e) in order of closest to farthest. The states (a)-(e) correspond to the shapes of the spots 601a and 602a of FIGS. 4(a)-4(e), respectively.

First, in the case of the state (c) in which focus is achieved, the spot 601 a has substantially the same distribution in the photodetection regions 451a and 451 b. At the same time, the spot 601 b also has substantially the same distribution in the photodetection regions 452a and 452b. Therefore, A (the signal from the photodetection region 451b) and B (the signal from the photodetection region 451 a), and C (the signal from the photodetection region 452a) and D (the signal from the photodetection region 452b) are each balanced, so that the focus error signal FE represented by expression (4) is zero.

Each diffraction region has a grating pattern for forming a spot which enters a photodetection region group with coma aberration in the X-direction.

In the case of the state (b) in which the optical disk 10 is closer to the objective lens 12 than in the case of the in-focus state (c), the spot 601 a is shifted so that a larger proportion thereof is distributed in the photodetection region 451b than in the photodetection region 451a, depending on how much the optical disk 10 moves closer to the objective lens 12. At the same time, the spot 601b is shifted so that a larger proportion thereof is distributed in the photodetection region 452a than in the photodetection region 452b (see FIG. 4(b)).

As a result, the focus error signal FE represented by expression (1) has a negative value.

In the case of the state (a) in which the optical disk 10 is even closer to the objective lens 12, as shown in FIG. 4(a), the entire spot 601a is shifted into the photodetection region 451a while the entire spot 601b is shifted into the photodetection region 452a. In this state, the focus error signal FE has a minimum value.

Conversely, in the state (d) in which the optical disk 10 is farther from the objective lens 12 than in the case of the state (c), the spot 601a is shifted so that a larger proportion thereof is distributed in the photodetection region 451a than in the photodetection region 451 b, depending on how much the optical disk 10 moves farther away from the objective lens 12. At the same time, the spot 601 b is shifted so that a larger portion thereof is distributed in the photodetection region 452b than in the photodetection region 452a (see FIG. 4(d)). As a result, the focus error signal FE represented by expression (1) has a positive value.

In the state (e) in which the optical disk 10 is even farther from the objective lens 12, as shown in FIG. 4(e) the entire spot 601a is shifted into the photodetection region 451a while the entire spot 601b is shifted into the photodetection region 452b. In this state, the focus error signal FE has a maximum value.

Thus, the focus error signal FE can be obtained as a signal which varies with the position of the optical disk 10 with respect to the objective lens 12. An interval between the position of the optical disk 10 where the focus error signal FE has the maximum value and the position of the optical disk 10 where the focus error signal FE has the minimum value, i.e., a detection range of the focus error signal FE, can be set, depending on the degree of coma aberration of the hologram element 20.

Next, the aforementioned focus error signal detecting method is applicable to optical information recording media having a plurality of information recording layers. The description is provided below.

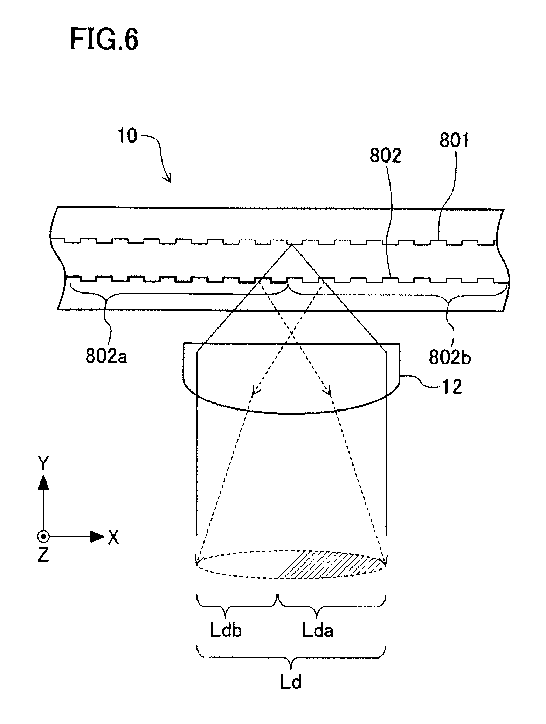

First, a dual-layer optical information recording medium will be described. FIG. 6 schematically shows how information is recorded and reproduced to and from an optical disk 10 which is a dual-layer optical information recording medium having two information recording layers 801 and 802. FIG. 6 shows a state in which light is focused on the information recording layer 801 which is located farther from the objective lens 12.

In this case, the incident light is reflected not only from the information recording layer 801, but also from the information recording layer 802 which is located closer to the objective lens 12. The light intensity distribution of the reflected light from the information recording layer 802 is modulated, depending a recording state of the information recording layer 802. Since the reflected light from the information recording layer 802 is reflected in the out-of-focus state, the reflected light is not converted into parallel light even when the reflected light is transmitted through the objective lens 12. As a result, the reflected light enters the photodetector 40 as diverging stray light. Note that the reflected light from the information recording layer 802 which is in such an out-of-focus state is shown as out-of-focus reflected light Ld using a dashed line in FIG. 6.

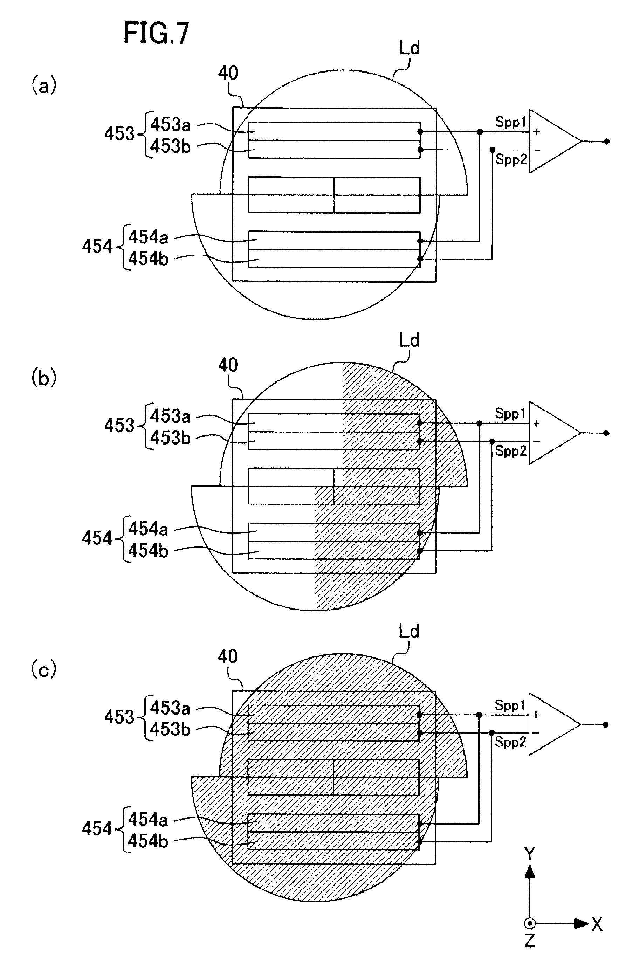

Next, FIGS. 7(a)-7(c) show states in which the out-of-focus reflected light Ld from the information recording layer 802 enters the photodetector 40. FIG. 7(a) shows a case where all the out-of-focus reflected light Ld is reflected from an unrecorded area 802b of the information recording layer 802. FIG. 7(b) shows a case where the reflected light Ld is reflected from both a recorded area 802a and the unrecorded area 802b of the information recording layer 802. FIG. 7(c) shows a case where all the reflected light Ld is reflected from the recorded area 802a of the information recording layer 802. Note that recorded area reflected light Lda from the recorded area 802a has lower intensity than that of unrecorded area reflected light Ldb from the unrecorded area 802b. The unrecorded area reflected light Ldb corresponds to hatched portions of FIGS. 7(a)-7(c).

The variation in a tracking error signal is mainly caused by stray light derived from the main beam entering the photodetection region groups 453 and 454. Therefore, the stray light derived from the main beam is shown in the figures, but stray light derived from the sub-beams (L0b and L0c) are not shown. The reflected light from the information recording layer 801 is also not shown.

The stray light derived from the main beam extends off photodetection regions (the photodetection region groups 451 and 452) which generate $TE_{MPP}$, and also enters photodetection regions (the photodetection region groups 453 and 454) which generate $TE_{SPP}$.

The amplification gain of a signal detected from the photodetection regions (the photodetection region groups 453 and 454) which generate $TE_{SPP}$ is typically set to be larger than the amplification gain of a signal detected from the photodetection regions (the photodetection region groups 451 and 452) which generate $TE_{MPP}$. Therefore, conventionally, the stray light derived from the main beam has a significant influence on $TE_{SPP}$.

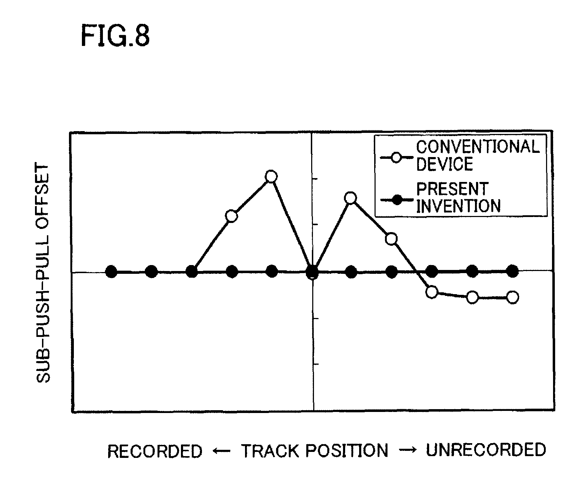

In this regard, FIG. 8 shows offsets of $TE_{SPP}$ signals as they are when an out-of-focus spot moves across the boundary between a recorded area and an unrecorded area on the information recording layer 802. FIG. 8 shows a conventional example and an example of this embodiment. As shown in FIG. 8, while, conventionally, the $TE_{SPP}$ signal varies when the spot moves across the boundary between a recorded area and an unrecorded area of an information recording medium, a stable tracking error signal which substantially does not vary is generated in this embodiment.

This is because, in this embodiment, even when out-of-focus light straddles the boundary between a recorded area and an unrecorded area, the variations of the $TE_{SPP}$ signal are canceled by each other in the photodetection region groups (photodetection region groups 453 and 454) which generate the $TE_{SPP}$ signal.

Specifically, in the photodetection region group 453, the photodetection regions 453a and 453b are symmetrically arranged with respect to a dividing line parallel to the X-axis. As a result, even when the recorded area reflected light Lda having decreased intensity which is reflected light from the recorded area 802a enters the photodetection regions 453a and 453b, variations in signals in the photodetection regions 453a and 453b are substantially equal to each other. Therefore, the $TE_{SPP}$ signal which is a difference between these signals does not vary.

Similarly, in the photodetection region group 454, the photodetection regions 454a and 454b are symmetrically arranged with respect to a dividing line parallel to the X-axis. Therefore, even when the recorded area reflected light Lda having decreased intensity which is reflected light from the recorded area 802a enters the photodetection regions 454a and 454b, variations in signals in the photodetection regions 454a and 454b are substantially equal to each other. Therefore, the $TE_{SPP}$ si gnal, which is a difference between these signals, does not vary.

As a result, even when an out-of-focus spot moves across the boundary between the recorded area 802a and the unrecorded area 802b of the information recording layer 802, a variation in the $TE_{SPP}$ signal does not occur, and therefore, a tracking error signal can be stably detected.

Note that the above description is provided on the assumption that a recording medium has lower reflectance in a recorded area than in an unrecorded area. Conversely, a recording medium may have higher reflectance in a recorded area than in an unrecorded area. In this case, in FIGS. 7(a)-7(c), the hatched portions may be assumed to indicate regions having higher light intensity.

Second Embodiment

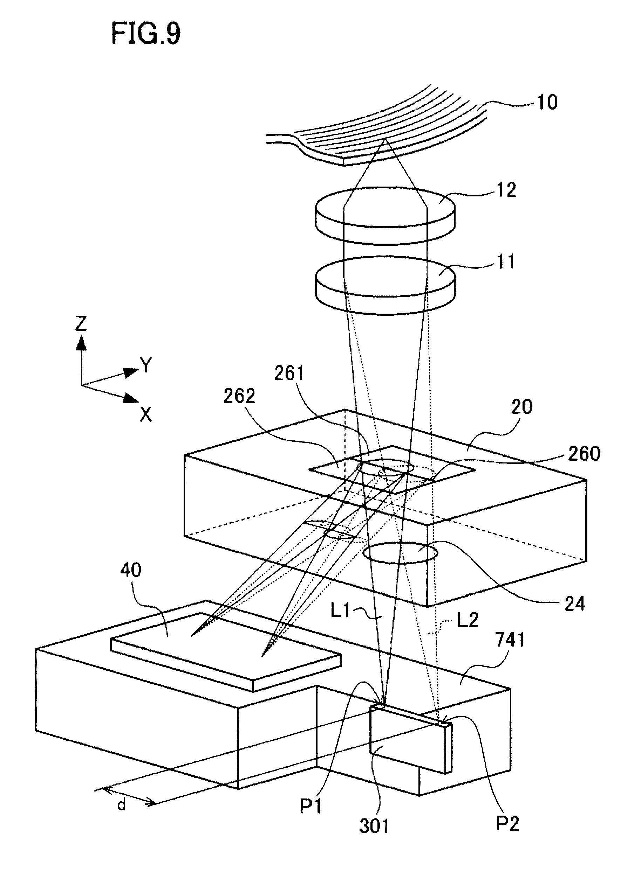

An example optical head device according to a second embodiment of the present disclosure will be described hereinafter with reference to the drawings. FIG. 9 is a diagram schematically showing a main portion of the example optical head device of this embodiment.

The optical head device records and reproduces information to and from two types of optical disks such as CDs and DVDs having different specifications. As the basic configuration, the optical head device of this embodiment includes a semiconductor laser 301 with two wavelengths instead of the semiconductor laser 30 with one wavelength in the optical head device of the first embodiment shown in FIG. 1.

In the semiconductor laser 301, a first light source emitting light with a first wavelength λ1, and a second light source emitting light with a second wavelength λ2 are monolithically integrated. In FIG. 9, the same components as those of FIG. 1 are indicated by the same reference characters. The semiconductor laser 301 will be primarily described below.

In order to record and reproduce information to and from an optical disk having specifications for DVDs and CDs, the semiconductor laser 301 used here emits light L1 for DVDs with an oscillation wavelength ranging from 635 to 680 nm, and light L2 for CDs with an oscillation wavelength ranging from 780 to 820 nm. In accordance with the type of the optical disk 10, either one of light having the wavelengths is selected and emitted, thereby recording and reproducing information to and from the desired optical recording medium (CD or DVD).

In the semiconductor laser 301, an emission point P1 of the light L1 and an emission point P2 of the light L2 are arranged side by side with a distance d in the radial direction (X-direction). Out of the two emission points, the emission point with a shorter wavelength is arranged at the side of the photodetector. This is to allow the light L1 and the light L2 to enter the same position of the photodetector 40 utilizing the fact that the hologram element 20 has a smaller diffraction angle when the light has a shorter wavelength.

Note that, instead of the semiconductor laser in which two light sources are monolithically integrated, two semiconductor lasers emitting light having different wavelengths may be used. However, the monolithic semiconductor laser is more preferable, since the distance d between two emission points can be accurately set.

The light L1 emitted by a semiconductor laser 301 is diffracted at a desired ratio by a diffraction grating 24 of a hologram element 20 to be divided into a main beam (L1a) which is zeroth-order light, and two sub-beams L1b and L1c (not shown) which are $\pm$1-order light. Similarly, the light L2 is divided by the diffraction grating 24 into a main beam (L2a) which is zeroth-order light, and two sub-beams L2b and L2c (not shown) which are $\pm$1-order light.

These beams are transmitted through the hologram element 20 before being collected onto an information recording surface of an optical disk 10 by a collimator lens 11 and an objective lens 12. Light reflected from the optical disk 10 is converted by the objective lens 12 and the collimator lens 11, into light which is converged toward an emission point (P1 or P2) of the semiconductor laser 301. The converted light enters the hologram element 20 and is diffracted by the diffraction regions 261 and 262. The diffracted light enters the photodetector 40 and is detected by the photodetector 40 as a signal. A size and a position of the diffraction grating 24 are set so that the light diffracted by the diffraction regions 261 and 262 does not enter the diffraction grating 24 and is not further diffracted.

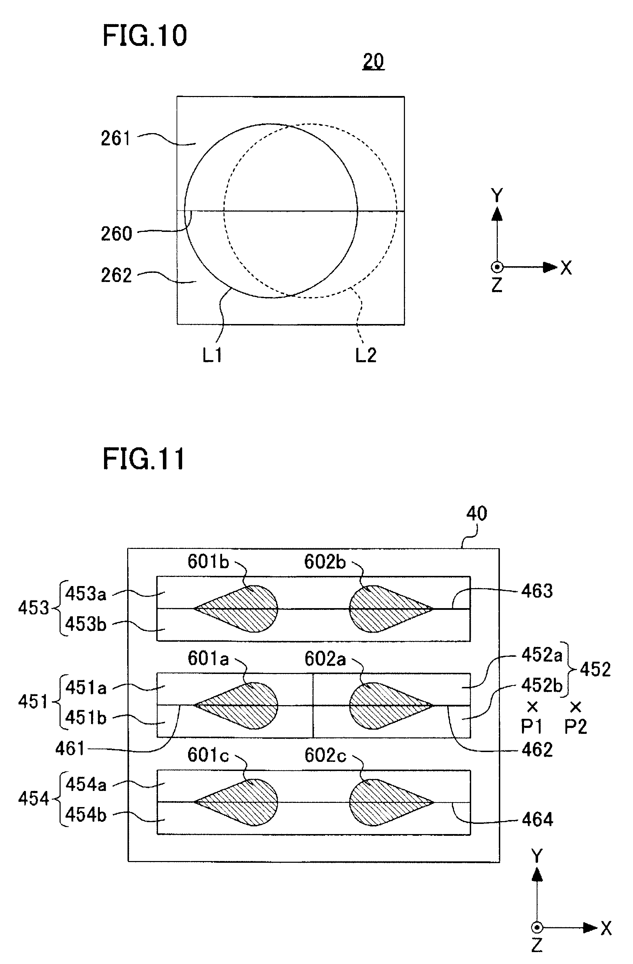

Next, FIG. 10 shows the positional relationship between the hologram element 20 and the light L1 and L2 entering the hologram element 20 in this embodiment. FIG. 11 is a plan view showing the configuration of the photodetector 40, and the positional relationship between the photodetector 40 and the light L1 and L2 in the semiconductor laser 301.

As shown in FIG. 10, the hologram element 20 has the diffraction regions 261 and 262 which are separated from each other by a straight line 260 which extends through substantially a center (the optical axis of the light collecting optical system) of the light (both of L1 and L2) and is substantially parallel to the X-axis. The diffraction regions 261 and 262 have different grating patterns from each other to transmit the light emitted by the semiconductor laser 301 without modification and to diffract returning light reflected from the optical disk 10 toward the photodetector 40.

Note that incident positions of the light L1 and L2 on the hologram element 20 are different from each other, since they have emission points in different positions. However, by arranging the emission points P1 and P2 side by side in the X direction, the optical axes of the light L1 and L2 can be arranged on the straight line 260.

Furthermore, the photodetector 40 in FIG. 11 has a similar configuration to that of the first embodiment (FIG. 3). Specifically, the photodetector 40 has photodetection region groups 451, 452, 453, and 454. Each photodetection region group has a pair of photodetection regions (in order, photodetection regions 451a and 451b, 452a and 452b, 453a and 453b, and 454a and 454b) on the opposite sides of a dividing line substantially parallel to the X direction.

The functions of the hologram element 20 and the photodetector 40 are similar to those in the first embodiment expect for the fact that the hologram element 20 and the photodetector 40 of this embodiment can be used for detecting both of the light L1 and L2.

That is, the photodetection region groups 451 and 452 are associated with the main beams (L1a and L2a) of the returning light from the optical disk 10 so that the returning light of the main beams of the optical disk 10 diffracted by the diffraction regions 261 and 262 enter as spots 601a and 602a, respectively. The spots 601a and 602a have coma aberration in the X direction and with polarity opposite to each other.

Also, the photodetection region group 453 is associated with the sub-beams L1b and L2b of the returning light so that the returning light of the sub-beams from the optical disk 10 diffracted by the diffraction regions 261 and 262 enter as spots 601b and 602b, respectively. Furthermore, the photodetection region group 454 is associated with the sub-beams L1c and L2c of the returning light so that the returning light from the optical disk 10 diffracted by the diffraction regions 261 and 262 enter as spots 601c and 602c. The relation between the spots and coma aberration is similar to that in the first embodiment.

From the foregoing, according to the optical head device of this embodiment, regardless of which of the emission points P1 and P2 is used, a focus error signal and a tracking error signal can be obtained in a similar manner to the first embodiment. In this case, a stable signal can be obtained even in an information recording medium having two or more information recording layers.

Also in the optical head device of this embodiment, the beams are divided in the radial direction to perform detection by a push-pull method. Since the beams are divided along a dividing line extending in the X direction, light (L1 and L2) emitted by the emission point P1 and the emission point P2 which are arranged side by side in the X direction with a distance d is equally divided. Thus, in an optical head device having two light sources for emitting light with two wavelengths, a stable tracking error signal can be obtained regardless of which of the light sources is used. Information can be stably recorded and reproduced on and from various optical disks using light having different wavelengths.

Third Embodiment

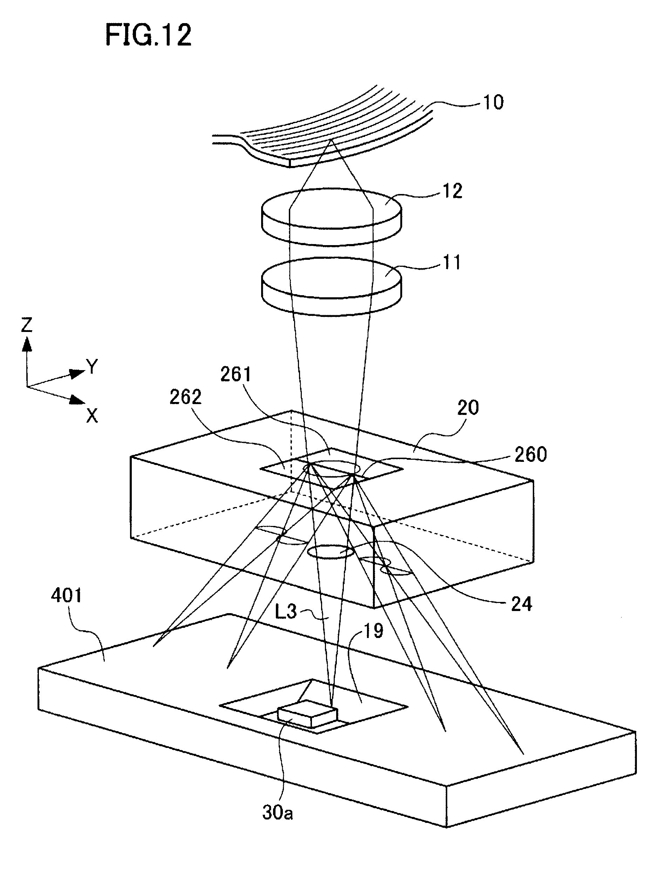

An example optical head device according to a third embodiment of the present disclosure will be described hereinafter with reference to the drawings. FIG. 12 is a diagram schematically showing a main portion of the example optical head device.

Compared to the optical head device according to the first embodiment shown in FIG. 1, the optical head device of this embodiment has a different photodetector and semiconductor laser. The same components as those of FIG. 1 are indicated by the same reference characters and will not be described in detail. Different portions from the optical head device in FIG. 1 will be described hereinafter in detail.

In FIG. 12, a semiconductor laser 30a is fixed to a recess provided on an upper surface of a photodetector 401. The recess is provided with a reflecting mirror 19 reflecting light L3 emitted from the semiconductor laser 30a toward an optical axis direction (Z-direction).

The hologram element 20 having the diffraction grating 24 and the diffraction regions 261 and 262, the collimator lens 11, the objective lens 12, and the optical disk 10 are similar to those in the first embodiment. The optical head device further includes a lens drive mechanism (not shown) which moves the objective lens 12 in a Z-direction and an X-direction, and holding means (not shown) fixing the photodetector 40 and the hologram element 20 to have a desired positional relationship. These components form a light collecting optical system collecting light to the optical disk 10.

Light L3 emitted from the semiconductor laser 30a and reflected by the reflecting mirror 19 in the Z direction is divided into one main beam and two sub-beams by the diffraction grating 24 of the hologram element 20. These beams are transmitted through the diffraction regions 261 and 262 before being collected onto an information recording surface of the optical disk 10 by the collimator lens 11 and the objective lens 12. The light reflected by the information recording surface enters the hologram element 20 through the objective lens 12 and the collimator lens 11, and is diffracted.

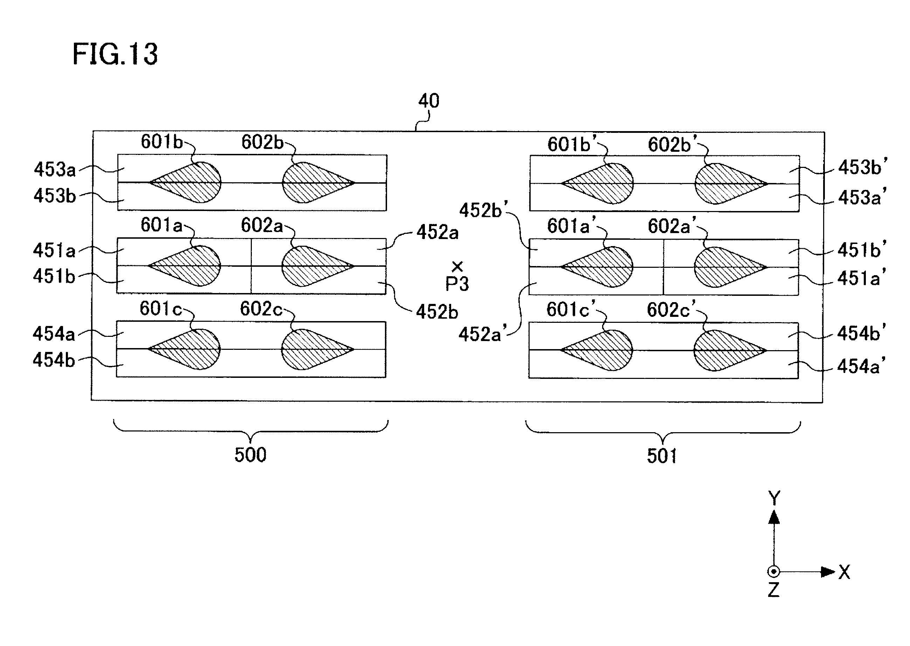

The diffraction regions 261 and 262 of the hologram element 20 have the same rating patterns as those in the first embodiment (FIG. 2). Note that, in the first embodiment, only +1-order light of the light diffracted by the diffraction regions 261 and 262 is detected by the photodetector 40. On the other hand, in this embodiment, -1-order light is also detected by the photodetector 401 in addition to the +1-order light. Thus, the photodetector 401 has a photodetection region in a position including an emission point P3 of the semiconductor laser 30a. This configuration is shown in FIG. 13.

In FIG. 13, a +1-order light detection region 500, which is provided on the negative side of the X axis with respect to the emission point P3, has the same configuration as the photodetector 40 in the first embodiment (FIG. 3). The photodetection regions are indicated by the same reference characters as those in FIG. 3. The +1-order light of the light diffracted by the hologram element 20 enters the photodetection regions as 601a, 602a, 601 b, 602b, 601 c, and 602c.

Also, a -1-order light detection region 501 is provided on the opposite side of the emission point P3 to the +1-order light detection region 500 (the positive side in the X axis). The configuration of the region 501 is similar to that of the +1-order light detection region 500. Photodetection regions in the region 501 corresponding to those in the region 500 are indicated by the same reference characters primed. For example, a photodetection region 451a' in the region 501 corresponds to a photodetection region 45 1 a in the region 500. The -1-order light of the light diffracted by the hologram element 20 enters the photodetection regions as the spots 601a', 602a', 601b', 602b', 601c', and 602c'.

Similar signals are obtained from the photodetection regions of the +1-order light detection region 500 and the -1-order light detection region 501, and are amplified by a same amplifier, or later, summed by a summing amplifier. For example, a signal of the photodetection region 451a and a signal of the photodetection region 451a' are summed.

A focus error signal and a tracking error signal are generated by calculation of the expressions 1-6 described in the first embodiment using the +1-order light detection region 500 and the -1-order light detection region 501. As such, since the -1-order light can be detected in addition to the +1-order light, the efficiency of light detection is improved, thereby enabling signal detection with less noise. Even when the emission point P3 shifts in the Y direction, the variation of a signal obtained from the +1-order light and the variation of a signal obtained from the -1-order light are canceled, degradation of signal properties can be reduced.

As described above, the optical head device of this embodiment has the same features as the optical head device of the first embodiment, but has less noise and higher assembly tolerance.

INDUSTRIAL APPLICABILITY

According to the optical head device, the optical information processing apparatus and the focus error signal detection method of the present disclosure, stable recording and reproduction can be performed in an information recording medium having a plurality of information recording layers. Therefore, the devices and method of the present disclosure are applicable to recording and reproduction of information using optical information recording media; and particularly applicable to storage of data and programs in computers, storage of map data in car navigation systems, and the like.

**Claims**

1. An optical head device comprising:

   a light source configured to emit a light beam;
   a light collecting optical system configured to converge the light beam onto an information recording medium;

a hologram element configured to diffract the light beam reflected from the information recording medium; and a photodetector having a plurality of detection regions configured to receive the light beam diffracted by the hologram element, wherein

the hologram element has two diffraction regions separated from each other by a straight line extending in a radial direction of the information recording medium, and

at least one of the two diffraction regions has a pattern which introduces coma aberration in the radial direction to the diffracted light.

2. The optical head device of claim 1, wherein

at least one pair of detection regions of the plurality of detection regions possessed by the photodetector are provided, facing each other, on opposite sides of a dividing line extending in the radial direction,

the diffracted light having the coma aberration enters the dividing line, and

a focus error signal is obtained based on signals detected in the at least one pair of detection regions.

3. An optical head device comprising:

a light source configured to emit a light beam;

a light collecting optical system configured to converge the light beam onto an information recording medium;

a hologram element configured to diffract the light beam reflected from the information recording medium; and

a photodetector having a plurality of detection regions configured to receive the light beam diffracted by the hologram element, wherein

the plurality of detection regions possessed by the photodetector include a first photodetection region and a second photodetection region provided, facing each other, on opposite sides of a first dividing line extending in a radial direction of the information recording medium, and a third photodetection region and a fourth photodetection region provided, facing each other, on opposite sides of a second dividing line extending in the radial direction,

the hologram element has a first diffraction region and a second diffraction region separated from each other by a straight line extending in the radial direction,

the first diffraction region has a pattern which introduces coma aberration in the radial direction, and generates diffracted light converging onto the first dividing line,

the second diffraction region has a pattern which introduces coma aberration in the radial direction, and generates diffracted light converging onto the second dividing line, and

a focus error signal is obtained based on a differential signal between a signal in the first detection region and a signal in the second detection region, and a differential signal between a signal in the third detection region and a signal in the fourth detection region.

4. An optical head device comprising:

a light source configured to emit a light beam;

a diffraction grating configured to generate one main beam and two sub-beams from the light beam;

a light collecting optical system configured to converge the main beam and the sub-beams onto an information recording medium;

a hologram element configured to diffract the main beam and the sub-beams reflected from the information recording medium; and

a photodetector having a plurality of detection regions configured to receive light diffracted by the hologram element, wherein

the hologram element has two diffraction regions separated from each other by a straight line extending in a radial direction of the information recording medium, and

at least one of the two diffraction regions has a pattern which introduces coma aberration in the radial direction to the diffracted light.

5. The optical head device of claim 4, wherein

the plurality of detection regions possessed by the photodetector include a first pair of detection regions provided, facing each other, on opposite sides of a first dividing line extending in the radial direction, and a second pair of detection regions provided, facing each other, on opposite sides of a second dividing line extending in the radial direction,

the diffracted light of the main beam having the coma aberration enters the first dividing line of the first pair of detection regions,

a focus error signal is obtained based on signals detected in the first pair of detection regions,
the diffracted light of the sub-beams having the coma aberration enters the second dividing line of the second pair of detection regions, and
a tracking error signal is obtained based on signals detected in the second pair of detection regions.

6. The optical head device of any one of claims 1-5, further comprising
another emission point arranged in line with the emission point of the light source in the radial direction, and emitting a light beam having a different wavelength from that of the emission point.

7. An optical information processing apparatus configured to record and reproduce information to and from an information recording medium by irradiating the information recording medium with light, comprising
the optical head device of any one of claims 1-6.

8. A method of detecting a focus error signal for an optical head device, wherein
the optical head device includes

a light source configured to emit a light beam,
a light collecting optical system configured to converge the light beam onto an information recording medium,
a hologram element configured to diffract the light beam reflected from the information recording medium, and
a photodetector having a plurality of detection regions configured to receive the light beam diffracted by the hologram element,

the hologram element has two diffraction regions separated from each other by a straight line extending in a radial direction of the information recording medium,
at least one of the two diffraction regions has a pattern which introduces coma aberration in the radial direction to the diffracted light,
at least one pair of detection regions of the plurality of detection regions possessed by the photodetector are provided, facing each other, on opposite sides of a dividing line extending in the radial direction,
the diffracted light having the coma aberration enters the dividing line, and
the method comprises the step of:

obtaining the focus error signal based on signals detected in the at least one pair of detection regions.

9. A method of detecting a focus error signal for an optical head device, wherein
the optical head device includes

a light source configured to emit a light beam,
a light collecting optical system configured to converge the light beam onto an information recording medium,
a hologram element configured to diffract the light beam reflected from the information recording medium, and
a photodetector having a plurality of detection regions configured to receive the light beam diffracted by the hologram element,

the plurality of detection regions possessed by the photodetector include a first photodetection region and a second photodetection region provided, facing each other, on opposite sides of a first dividing line extending in a radial direction of the information recording medium, and a third photodetection region and a fourth photodetection region provided, facing each other, on opposite sides of a second dividing line extending in the radial direction,
the hologram element has a first diffraction region and a second diffraction region separated from each other by a straight line extending in the radial direction,
the first diffraction region has a pattern which introduces coma aberration in the radial direction, and generates diffracted light converging onto the first dividing line,
the second diffraction region has a pattern which introduces coma aberration in the radial direction, and generates diffracted light converging onto the second dividing line, and
the method comprises the step of:

obtaining a focus error signal based on a differential signal between a signal in the first detection region and a signal in the second detection region, and a differential signal between a signal in the third detection region and a signal in the fourth detection region.

FIG.1

## FIG.2

## FIG.3

# FIG.4

# FIG.5

## FIG.6

FIG.7

(a)

(b)

(c)

FIG.8

RECORDED ← TRACK POSITION → UNRECORDED

FIG.9

# FIG.10

20

261
260
262

L1    L2

Y
Z  X

# FIG.11

40

601b    602b
453 { 453a    463
      453b

451 { 451a    601a    602a    452a } 452
      451b    452b
461           462
              P1  P2

454 { 454a    601c    602c    464
      454b

Y
Z  X

# FIG.12

FIG.13

EP 2 293 297 A1

# FIG.14

# FIG.15

FIG.16

EP 2 293 297 A1

1040

| S14 | S15 | | S16 | S17 |
|---|---|---|---|---|
| I1 | J1 | | J2 | I2 |

| S18 | S19 | | S20 | S21 |
|---|---|---|---|---|
| A1 B1 C1 D1 | E1 F1 G1 H1 | | G2 H2 E2 F2 | C2 D2 A2 B2 |

| S22 | S23 | | S24 | S25 |
|---|---|---|---|---|
| I3 | J3 | | J4 | I4 |

Y
X
Z

# FIG.17

FIG.18

# FIG.19

SUB-PUSH-PULL OFFSET

RECORDED ← TRACK POSITION → UNRECORDED

# FIG.20

## INTERNATIONAL SEARCH REPORT

| | International application No. |
|---|---|
| | PCT/JP2009/000019 |

**A. CLASSIFICATION OF SUBJECT MATTER**
*G11B7/095*(2006.01)i, *G11B7/135*(2006.01)i

According to International Patent Classification (IPC) or to both national classification and IPC

**B. FIELDS SEARCHED**

Minimum documentation searched (classification system followed by classification symbols)
G11B7/00-G11B7/22

Documentation searched other than minimum documentation to the extent that such documents are included in the fields searched

| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2007-018683 A (Sharp Corp.), 25 January, 2007 (25.01.07), Par. Nos. [0013] to [0214]; Figs. 1 to 41 & WO 2006/132206 A1 | 1-9 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 January, 2009 (28.01.09) | 10 February, 2009 (10.02.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001229573 A
- JP 2001176119 A